# EUROPÄISCHE PATENTSCHRIFT

(11) **EP 1 903 471 B1**
(45) Veröffentlichungstag und Bekanntmachung des Hinweises auf die Patenterteilung: **28.09.2011**
(21) Anmeldenummer: 07015674.0
(22) Anmeldetag: 09.08.2007
(51) Int. Cl.: G06K 7/10, B07C 5/02, B41J 11/00, B65H 5/02, G02B 26/10, B65B 35/24

(54) **Vorrichtung zum optischen Abtasten einer auf einem Gegenstand aufgebrachten maschinenlesbaren Markierung**
Device for optical scanning of a machine-readable marking applied to an object
Dispositif destiné à la lecture optique d'un marquage lisible en machine se trouvant sur un objet

(30) Priorität: 20.09.2006 DE 102006044111; 15.11.2006 DE 102006054115
(43) Veröffentlichungstag der Anmeldung: 26.03.2008
(73) Patentinhaber: Wincor Nixdorf International GmbH, 33106 Paderborn (DE)
(72) Erfinder: Twiste, Josef, 33100 Paderborn (DE)

(56) Entgegenhaltungen:
- DE-A1- 2 006 575
- DE-A1- 3 722 422
- DE-A1- 10 235 865
- DE-A1- 19 542 647
- DE-C1- 4 235 369

## Beschreibung

Die Erfindung geht aus von einer Vorrichtung und einem Verfahren zum optischen Abtasten einer auf einem Gegenstand aufgebrachten maschinenlesbaren Markierung.

Derartige Vorrichtungen und Verfahren werden beispielsweise an den Kassenständen eines Selbstbedienungswarenhauses zur Erfassung der von einem Kunden ausgewählten Gegenständen eingesetzt. Bei den abzutastenden Gegenständen handelt es sich um Waren. Die Registrierung der Waren soll automatisch erfolgen, um auf die Anwesenheit eines Kassierers verzichten zu können. Bei der Markierung handelt es sich beispielsweise um einen Strichcode. Zur Erfassung der Markierung an der Ware sind an einer Transporteinrichtung eine oder mehrere Abtasteinrichtungen angeordnet. Hierbei ist dafür Sorge zu tragen, dass die Waren der Abtasteinrichtung einzeln zugeführt werden, und dass die Markierung auch dann von der Abtasteinrichtung erfasst wird, wenn der Gegenstand mit der die Markierung aufweisenden Seite auf dem Transportband aufliegt. Letzteres ist von besonderer Bedeutung, da die meisten Waren nur an einer Stelle mit einer Markierung ausgestattet sind, und eine nicht zu vernachlässigende Wahrscheinlichkeit besteht, dass der Kunde die Waren mit der die Markierung aufweisenden Seite nach unten auf das Transportband auflegt. Derartig positionierte Waren können von einer Abtasteinrichtung, welche oberhalb oder seitlich der Transportbänder angeordnet ist, nicht erfasst werden. Kann eine Ware nicht registriert werden, so wird sie zurück zum Kunden transportiert und der Kunde aufgefordert, die Ware in einer anderen Ausrichtung erneut auf das Transportband aufzulegen. Dies führt zu einer Verzögerung bei der Registrierung der Waren.

Aus der DE 37 22 422 A1 ist eine Transportvorrichtung für Flaschen bekannt, bei der die Flaschen über eine Transportschnecke und ein Sternrad einem Drehteller zugeführt werden, wo die Flaschen dann auf dem Drehteller stehend vor einem optischen Sensor rotiert werden.

Aus der DE 42 35 369 C1 ist eine Transportvorrichtung für Glasbehälter bekannt, bei der die Glasbehälter unter anderem über Transportfinger einer Rollenkette transportiert werden.

Aus der DE 2 006 575 ist eine Transportvorrichtung für stehend zu transportierende Flaschen bekannt, welche ein Transportband und ein oberhalb davon angeordnetes zusätzlichen Band mit Mitnehmerformteilen aufweist. Dabei dienen die Mitnehmerformteile dazu, die leicht umfallenden Flaschen sicher und schonend auf dem eigentlichen Transportband zu transportieren.

Aus der DE 102 35 865 A1 ist eine Supermarktkasse mit einem Transportband und einer daran anschließenden optischen Abtasteinrichtung bekannt. Dort werden darüber hinaus Markierungsmittel beschrieben, die es erlauben, das Transportband sichtbar in verschiedene Zonen (Abrechnungsbereiche) zu unterteilen. Diese Markierungsmittel sowie die allgemein bekannten Kundentrennstäbe, welche auf die Transportbänder von Supermarktkassen gelegt werden, sind jedoch nicht zum Transport von Gegenständen vorgesehen.

Die Ansprüche sind gegen dieses Dokument abgegrenzt.

Aus dem Stand der Technik der DE 101 41 429 C1 ist eine Vorrichtung zum optischen Abtasten von Markierungen bekannt, bei der in einer Lücke zwischen zwei Transportbändern eine Abtasteinrichtung angeordnet ist. Die Abtasteinrichtung erlaubt das Erfassen einer Markierung an der den Transportbändern zugewandten Unterseite eines Gegenstandes. Dabei ist die Abtasteinrichtung Bestandteil eines Hohlkörpers. Um zu erreichen, dass auch sehr kleine Gegenstände zuverlässig von einem Transportband auf das andere oder eine Ablage gelangen, sind die Lücke und die in die Lücke eingefügte Abtasteinrichtung sehr schmal gehalten. Bei einem zweiten Ausführungsbeispiel weist der transparente Hohlkörper die Form eines Zylinders auf, dessen Achse parallel zu den Umlenkrollen der Transportbänder ausgerichtet ist, und der mit einer zu der Transportgeschwindigkeit der Transportbänder synchronen Umfangsgeschwindigkeit rotiert. Als nachteilig erweist sich dabei, dass es sich bei der Abtasteinrichtung auf Grund der genannten Anforderungen um eine kostenintensive Spezialanfertigung handelt, und dass der Transport sowie die Erfassung kleiner Gegenstände nicht gewährleistet werden kann.

Demgegenüber weist die erfindungsgemäße Vorrichtung mit den Merkmalen des Anspruchs 1 den Vorteil auf, dass die Gegenstände unabhängig von ihrer Größe durch eine zusätzlich vorgesehene Transporteinrichtung in zuverlässiger Weise über die Abtasteinrichtung geführt werden können. Die Transporteinrichtung ist mit mehreren Mitnehmern ausgestattet, welche dafür sorgen, dass die Gegenstände einzeln an der Abtasteinrichtung entlang geführt und durch diese erfasst werden. An die Größe und die Form der Abtasteinrichtung werden keine besonderen Anforderungen gestellt. Bei der Abtasteinrichtung kann es sich um eine standardisierte Einrichtung handeln, wie sie bei bekannten Kassensystemen zum Einsatz kommt. Die Vorrichtung kann somit kostengünstig hergestellt werden.

Die Mitnehmer werden vorteilhafterweise mit derselben Geschwindigkeit wie das Transportband bewegt. In diesem Fall wird eine Relativgeschwindigkeit zwischen den Mitnehmern und dem Transportband vermieden, welche auf Grund der Reibung zwischen dem Transportband und den Gegenständen zu unerwünscht hohen, auf die Mitnehmer wirkenden Kräfte und zu einer Positionsänderung der Gegenstände auf dem Transportband führen kann.

Die Mitnehmer werden hinsichtlich ihrer Form und ihres Materials an das Einsatzgebiet der Vorrichtung und an die im Einsatzgebiet angebotenen Gegenstände, beispielsweise Waren angepasst. Da die Mitnehmer vorteilhafterweise mit derselben Transportgeschwindigkeit bewegt werden wie das Transportband, wird durch die Mitnehmer im Bereich des Transportbandes keine Kraft auf die Gegenstände ausgeübt. Zu einer Krafteinwirkung der Mitnehmer auf die Gegenstände kommt es im Verlauf des Transportvorganges erst im Bereich der Abtasteinrichtung. Die Oberfläche der Abtasteinrichtung, mit der die Gegenstände bei ihrem Transport in Berührung kommen, ist vorteilhafterweise glatt ausgebildet, um die Reibung zwischen der Ware und der Oberfläche der Abtasteinrichtung zu minimieren. Bei der Wahl des Materials und der Form der Mitnehmer ist darauf achten, dass die daraus resultierende Stabilität der Mitnehmer ausreicht, um den Reibungskräften standzuhalten und die Gegenstände in zuverlässiger Weise über die Abtasteinrichtung zu transportieren.

Bei der Form der Mitnehmer und ihrer Position relativ zu dem Transportband ist zu berücksichtigen, dass sowohl kleine flache Gegenstände als auch Gegenstände mit einer entsprechenden Höhe transportiert werden können. Der Abstand zwischen den Mitnehmern und dem Transportband sowie der Abstand zwischen den Mitnehmern und der Abtasteinrichtung ist vorteilhafterweise geringer als der kleinste im Einsatzbereich zu transportierende Gegenstand. Darüber hinaus ist die Angriffsfläche, mit der die Mitnehmer mit den Gegenständen wechselwirken können, vorteilhafterweise so groß gewählt, dass der größte im Einsatzbereich zu transportierende Gegenstand erfasst und über die Abtasteinrichtung geschoben wird.

Die Mitnehmer überdecken die Abtasteinrichtung und zumindest einen Abschnitt des Transportbandes und der Ablage, welcher der Abtasteinrichtung zugewandt ist. Auf diese Weise wird gewährleistet, dass die Mitnehmer die Gegenstände zunächst von dem Transportband auf die Abtasteinrichtung, dann entlang der Abtasteinrichtung und schließlich von der Abtasteinrichtung auf die Ablage führen.

Es bestehen verschiedene Möglichkeiten, um die Gegenstände mit den Mitnehmern in Wechselwirkung zu bringen. Bei einer beispielhaften Ausführungsform reicht die Transporteinrichtung mit den Mitnehmern von dem Bereich, in dem der Benutzer seine Gegenstände, seine Waren, auf das Transportband auflegt, bis zu dem Bereich der Ablage, in dem der Benutzer seine Gegenstände wieder entnimmt. Bei dieser Ausführungsform wird der Kunde dazu angehalten, jeden seiner Gegenstände zwischen jeweils zwei Mitnehmern auf dem Transportband zu positionieren.

Während bei diesem ersten Ausführungsbeispiel der Benutzer seine Gegenstände einzeln an die Mitnehmer heranführt, werden bei einer zweiten beispielhaften Ausführungsform die Mitnehmer der Transporteinrichtung an die bereits auf dem Transportband aufliegenden Gegenstände von der Seite oder von oben herangeführt. In diesem Fall ist der Bereich, in dem die Gegenstände zwischen den Mitnehmern positioniert sind, auf eine kürzere Distanz beschränkt als beim ersten Ausführungsbeispiel.

Nach einer vorteilhaften Ausgestaltung der Erfindung sind die Mitnehmer der Transporteinrichtung an zwei Transportorganen befestigt. Bei den Transportorganen kann es sich beispielsweise um Transportgurte oder Transportketten handeln, welche seitlich oberhalb des Transportbandes und der Abtasteinrichtung verlaufen. Die Transportorgane werden über einen Antrieb bewegt. Nach einer weiteren vorteilhaften Ausgestaltung der Erfindung kann der Antrieb des Transportbandes zusätzlich auch die Transporteinrichtung mit den Mitnehmern antreiben.

Nach einer weiteren vorteilhaften Ausgestaltung der Erfindung sind die Mitnehmer als Leisten oder Stege ausgebildet. Diese sind mit ihren Enden an den seitlich oberhalb der Transportbänder verlaufenden Transportgurten oder - ketten befestigt. Sie erstrecken sich damit über die gesamte oder nahezu die gesamte Breite des Transportbandes. Dadurch kann die gesamte Breite des Transportbandes zum Auflegen der Gegenstände genutzt werden. Der Abstand zwischen den Leisten oder Stegen wird je nach Einsatzbereich der Vorrichtung so gewählt, dass der zur Verfügung stehende Raum ausreicht, um beliebige, im konkreten Einsatzbereich zur Verfügung stehende Gegenstände zwischen je zwei Leisten oder Stegen auf dem Transportband positionieren zu können.

Nach einer weiteren vorteilhaften Ausgestaltung der Erfindung sind die Mitnehmer Teil eines zusätzlichen Transportbandes, welches Ausnehmungen zur Aufnahme von Gegenständen aufweist. Die Ausnehmungen können dabei rund, oval, rechteckig oder nach einem beliebigen Vieleck geformt sein. Die Stege oder Leisten, welche durch zwei aufeinander folgende Ausnehmungen quer zur Transportrichtung gebildet werden, können dabei dicker sein als die parallel zur Transportrichtung verlaufenden Abschnitte des zusätzlichen Transportbandes. Die Dicke führt zu einer erhöhten Stabilität der senkrecht zur Transportrichtung verlaufenden Abschnitte.

Nach einer weiteren vorteilhaften Ausgestaltung der Erfindung liegen die Mitnehmer unmittelbar auf dem Transportband auf. Dadurch wird dafür Sorge getragen, dass auch dünne und flache Gegenstände von den Mitnehmer erfasst und über die Abtasteinrichtung transportiert werden.

Nach dem erfindungsgemäßen Verfahren werden Gegenstände automatisch registriert, welche mit genau einer Markierung versehen sind, und welche derart auf ein Transportband einer Vorrichtung zur Erfassung aufgelegt werden, dass die Markierung dem Transportband zugewandt ist. Wird ein Gegenstand mit der die Markierung aufweisenden Seite auf ein Transportband zwischen je zwei Mitnehmer aufgelegt, so wird er durch die Mitnehmer über eine Abtasteinrichtung geführt und dort wird die Markierung abgetastet. Schließlich wird der Gegenstand durch die Mitnehmer einer Ablage zugeführt.

Weitere Vorteile und vorteilhafte Ausgestaltungen der Erfindung sind der nachfolgenden Beschreibung, der Zeichnung und den Ansprüchen entnehmbar.

In der Zeichnung ist ein Ausführungsbeispiel einer erfindungsgemäßen Vorrichtung dargestellt. Es zeigen:
- Figur 1: Vorrichtung zum optischen Abtasten einer auf einem Gegenstand aufgebrachten maschinenlesbaren Markierung in einer Ansicht von oben,
- Figur 2: Vorrichtung gemäß Figur 1 in Seitenansicht.

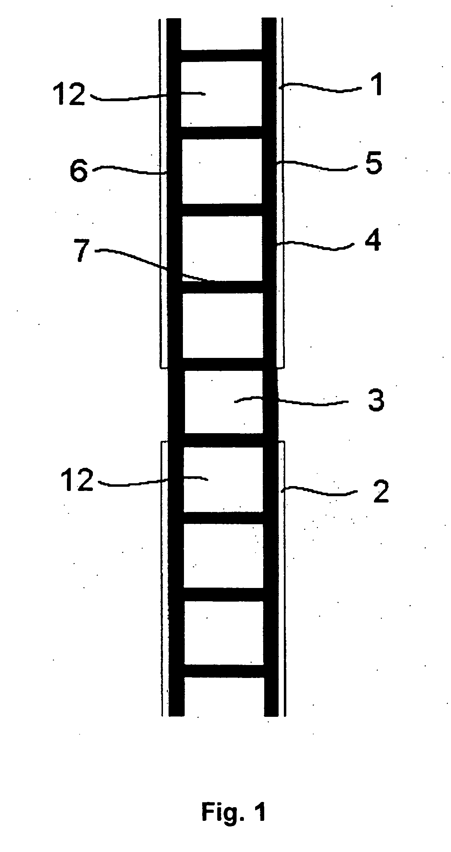

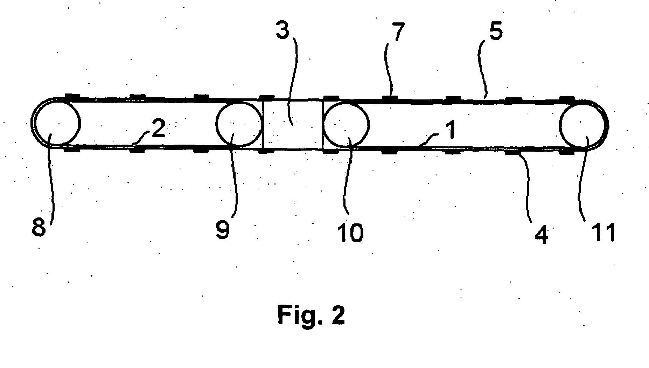

In den Figuren 1 und 2 ist eine Vorrichtung zum optischen Abtasten einer auf einem Gegenstand aufgebrachten maschinenlesbaren Markierung mit einem ersten Transportband 1, einem zweiten Transportband 2 und einer Abtasteinrichtung 3 dargestellt. Es ist aber auch möglich, nur Transportband 1 und eine Ablage nach der Abtastvorrichtung zu verwenden. In der beispielhaften Ausführung befindet sich die Abtasteinrichtung 3 zwischen den beiden Transportbändern 1 und 2. Parallel zu den beiden Transportbändern 1 und 2 verläuft eine zusätzliche Transporteinrichtung 4, welche im wesentlichen aus zwei Transportgurten 5 und 6 sowie zwischen den Transportgurten angeordneten Stegen 7 besteht. Die beiden Transportgurte 5 und 6 sowie die Stege 7 verlaufen unmittelbar an der Oberfläche der beiden Transportbänder 1 und 2 sowie der Abtasteinrichtung 3. Um beim Auflegen von in der Zeichnung nicht dargestellten Gegenständen auf das Transportband 1 einen möglichst großen Bereich des Transportbandes 1 nutzen zu können, verlaufen die beiden Transportgurte 5 und 6 entlang der Seiten der beiden Transportbänder 1 und 2. Die beiden Transportbänder 1 und 2 werden über Umlenkrollen 8, 9, 10 und 11 geführt. Die sich über beide Transportbänder 1 und 2 erstreckende zusätzliche Transporteinrichtung 4 wird über die beiden Umlenkrollen 8 und 11 geführt. Der Antrieb der beiden Transportbänder 1 und 2 und der zusätzlichen Transporteinrichtung 4 ist in der Zeichnung nicht dargestellt.

In den durch die Transportgurte 5 und 6 sowie zwei benachbarten Stegen 7 vorgegebenen Bereich 12 des ersten Transportbandes 1 kann ein Gegenstand gelegt werden. Dabei ist möglichst darauf zu achten, dass in jeden der Bereiche jeweils nur ein Gegenstand gelegt wird. Das erste Transportband 1 transportiert den Gegenstand bis zur Abtasteinrichtung 3. Bis zum Erreichen der Abtasteinrichtung 3 wird keine Kraft durch die Stege 7 auf die Gegenstände ausgeübt. Beim Übergang von dem Transportband 1 auf die Abtasteinrichtung 3 werden die Gegenstände durch die Stege 7 der Transporteinrichtung 4 mitgeführt und durch diese über die Oberfläche der Abtasteinrichtung 3 zum zweiten Transportband 2 geführt. Schließlich gelangen die Gegenstände durch die Stege 7 auf das Transportband 2 und werden, sobald sie auf dem Transportband 2 aufliegen, durch das Transportband 2 weitergeführt. Am Ende des zweiten Transportbandes 2 können die Gegenstände wieder entnommen werden.

### Bezugszahlen

- 1: erstes Transportband
- 2: zweites Transportband
- 3: Abtasteinrichtung
- 4: zusätzliche Transporteinrichtung
- 5: Transportgurt
- 6: Transportgurt
- 7: Steg
- 8: Umlenkrolle
- 9: Umlenkrolle
- 10: Umlenkrolle
- 11: Umlenkrolle
- 12: Bereich

## Patentansprüche

1. Vorrichtung zum optischen Abtasten einer auf einem Gegenstand aufgebrachten maschinenlesbaren Markierung,
- wobei die Vorrichtung mindestens ein Transportband (1) und eine Abtasteinrichtung (3) aufweist,
- wobei die Vorrichtung dazu geeignet ist, den Gegenstand auf dem Transportband (1) aufliegend in Richtung auf die Abtasteinrichtung (3) zu transportieren,
- wobei eine zusätzliche Transporteinrichtung (4) vorgesehen ist, welche mehrere sich quer zur Transportrichtung des Transportbandes (1) erstreckende Mitnehmer (7) aufweist,
- wobei die Transporteinrichtung (4) mit den Mitnehmern (7) oberhalb des Transportbandes (1) und oberhalb der Abtasteinrichtung (3) angeordnet ist,
**dadurch gekennzeichnet, daß**
- die Vorrichtung dazu geeignet ist, den Gegenstand von den Mitnehmern (7) über die Abtasteinrichtung (3) zu transportieren, wobei die Oberfläche der Abtasteinrichtung (3) mit dem Gegenstand bei dem Transport über die Abtasteinrichtung (3) in Berührung kommt,
- wobei die zusätzliche Transporteinrichtung (4) entlang der Transportrichtung sowohl vor als auch hinter der Abtasteinrichtung (3) jeweils oberhalb der Abtasteinrichtung (3) verläuft.

2. Vorrichtung nach Anspruch 1, **dadurch gekennzeichnet, dass** die Mitnehmer (7) der Transporteinrichtung (4) an Transportorganen (5, 6) befestigt sind, die mittels eines Antriebs angetrieben werden.

3. Vorrichtung nach Anspruch 2, **dadurch gekennzeichnet, dass** die Mitnehmer als Leisten oder Stege (7) ausgebildet sind.

4. Vorrichtung nach Anspruch 2 oder 3, **dadurch gekennzeichnet, dass** die Transportorgane (5,6) als Transportgurte oder Transportketten ausbildet sind, so dass zwischen den Leisten oder Stegen (7) und den Transportorganen (5,6) Bereiche (12) zur Aufnahme eines Gegenstands ausgebildet sind.

5. Vorrichtung nach Anspruch 1, **dadurch gekennzeichnet, dass** die Mitnehmer Teil eines zusätzlichen Transportbandes sind, welches Ausnehmungen zur Aufnahme von Gegenständen aufweist.

6. Vorrichtung nach einem der vorhergehenden Ansprüche, **dadurch gekennzeichnet, dass** die Mitnehmer (7) zumindest abschnittsweise unmittelbar auf dem Transportband (1) aufliegen.

7. Vorrichtung nach einem der vorhergehenden Ansprüche, **dadurch gekennzeichnet, dass** die Mitnehmer (7) eine Ausdehnung in vertikaler Richtung aufweisen.

8. Vorrichtung nach Anspruch 1 oder 2, **dadurch gekennzeichnet, dass** ein gemeinsamer Antrieb für das Transportband (1) und die Transporteinrichtung (4) vorgesehen ist.

9. Vorrichtung nach einem der vorstehenden Ansprüche, **dadurch gekennzeichnet, dass** bezogen auf die Transportrichtung des ersten Transportbandes (1) hinter der Abtasteinrichtung (3) ein zweites Transportband (2) oder eine Ablage vorgesehen ist.

## Claims

1. Apparatus for optically scanning a machine-readable marking which is provided on an object,
- with the apparatus having at least a conveyor belt (1) and a scanning device (3),
- with the apparatus being suitable for conveying the object lying on the conveyor belt (1) in the direction of the scanning device (3),
- with an additional conveyor device (4) being provided, the said additional conveyor device having a plurality of drivers (7) which extend transverse to the conveying direction of the conveyor belt (1),
- with the conveyor device (4) having the drivers (7) being arranged above the conveyor belt (1) and above the scanning device (3),
**characterized in that**
- the apparatus is suitable for conveying the object over the scanning device (3) using the drivers (7), with the surface of the scanning device (3) coming into contact with the object as the said object is conveyed over the scanning device (3),
- with the additional conveyor device (4) running in each case above the scanning device (3) both upstream and downstream of the scanning device (3) along the conveying direction.

2. Apparatus according to Claim 1, **characterized in that** the drivers (7) of the conveyor device (4) are attached to conveyor elements (5, 6) which are driven by means of a drive.

3. Apparatus according to Claim 2, **characterized in that** the drivers are in the form of strips or crosspieces (7).

4. Apparatus according to Claim 2 or 3, **characterized in that** the conveyor elements (5, 6) are in the form of conveyor bands or conveyor chains, and therefore regions (12) for holding an object are formed between the strips or crosspieces (7) and the conveyor elements (5, 6).

5. Apparatus according to Claim 1, **characterized in that** the drivers are part of an additional conveyor belt which has recesses for holding objects.

6. Apparatus according to one of the preceding claims, **characterized in that** at least sections of the drivers (7) rest directly on the conveyor belt (1).

7. Apparatus according to one of the preceding claims, **characterized in that** the drivers (7) have an expanded portion in the vertical direction.

8. Apparatus according to Claim 1 or 2, **characterized in that** a common drive is provided for the conveyor belt (1) and the conveyor device (4).

9. Apparatus according to one of the preceding claims, **characterized in that** a second conveyor belt (2) or a storage area is provided downstream of the scanning device (3) in relation to the conveying direction of the first conveyor belt (1).

## Revendications

1. Dispositif de palpage optique d'un marquage lisible par machine appliqué sur un objet,
- le dispositif présentant au moins une bande transporteuse (1) et un équipement de palpage (3),
- le dispositif étant conçu pour transporter l'objet reposant sur la bande transporteuse (1) en direction de l'équipement de palpage (3),
- un équipement de transport (4) supplémentaire étant prévu, lequel présente plusieurs éléments d'entraînement (7) qui s'étendent transversalement par rapport au sens de transport de la bande transporteuse (1),
- l'équipement de transport (4) avec les éléments d'entraînement (7) étant disposé au-dessus de la bande transporteuse (1) et au-dessus de l'équipement de palpage (3),
**caractérisé en ce que**
- le dispositif est conçu pour transporter l'objet par les éléments d'entraînement (7) au-dessus de l'équipement de palpage (3), la surface de l'équipement de palpage (3) venant en contact avec l'objet lors du transport au-dessus de l'équipement de palpage (3),
- l'équipement de transport (4) supplémentaire s'étendant le long du sens de transport à chaque fois au-dessus de l'équipement de palpage (3) à la fois devant et derrière l'équipement de palpage (3).

2. Dispositif selon la revendication 1, **caractérisé en ce que** les éléments d'entraînement (7) de l'équipement de transport (4) sont fixés à des organes de transport (5, 6) qui sont entraînés au moyen d'un mécanisme d'entraînement.

3. Dispositif selon la revendication 2, **caractérisé en ce que** les éléments d'entraînement sont réalisés sous la forme de baguettes ou de montants (7).

4. Dispositif selon la revendication 2 ou 3, **caractérisé en ce que** les organes de transport (5, 6) sont réalisés sous la forme de courroies de transport ou de chaînes de transport, de sorte que des zones (12) destinées à accueillir un objet sont formées entre les baguettes ou les montants (7) et les organes de transport (5, 6).

5. Dispositif selon la revendication 1, **caractérisé en ce que** les éléments d'entraînement font partie d'une bande transporteuse supplémentaire qui présente des évidements pour accueillir des objets.

6. Dispositif selon l'une des revendications précédentes, **caractérisé en ce que** les éléments d'entraînement (7) reposent au moins par sections directement sur la bande transporteuse (1).

7. Dispositif selon l'une des revendications précédentes, **caractérisé en ce que** les éléments d'entraînement (7) présentent une extension dans le sens vertical.

8. Dispositif selon la revendication 1 ou 2, **caractérisé en ce qu'**il est prévu un mécanisme d'entraînement commun pour la bande transporteuse (1) et l'équipement de transport (4).

9. Dispositif selon l'une des revendications précédentes, **caractérisé en ce qu'**en rapport avec le sens du transport de la première bande transporteuse (1), il est prévu une deuxième bande transporteuse (2) ou une tablette derrière l'équipement de palpage (3).
